(19) Europäisches Patentamt
European Patent Office
Office européen des brevets

(11) **EP 1 979 900 B1**

(12) **EUROPEAN PATENT SPECIFICATION**

(45) Date of publication and mention
of the grant of the patent:
**19.01.2011 Bulletin 2011/03**

(21) Application number: **07708760.9**

(22) Date of filing: **05.02.2007**

(51) Int Cl.:
*G10L 19/00* (2006.01)

(86) International application number:
**PCT/KR2007/000610**

(87) International publication number:
**WO 2007/089130 (09.08.2007 Gazette 2007/32)**

(54) **APPARATUS FOR ESTIMATING SOUND QUALITY OF AUDIO CODEC IN MULTI-CHANNEL AND METHOD THEREFOR**

VORRICHTUNG ZUR SCHÄTZUNG DER TONQUALITÄT EINES AUDIO-CODECS BEI MEHRKANAL UND VERFAHREN DAFÜR

APPAREIL POUR ÉVALUER LA QUALITÉ SONORE D'UN CODEUR-DÉCODEUR AUDIO EN MULTICANAL, ET PROCÉDÉ CORRESPONDANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **03.02.2006 KR 20060010642**
**27.07.2006 US 833622 P**
**12.09.2006 KR 20060088192**

(43) Date of publication of application:
**15.10.2008 Bulletin 2008/42**

(73) Proprietors:
• **Electronics and Telecommunications Research Institute**
**Yuseong-gu**
**Daejon 305-350 (KR)**
• **Seoul National University Industry Foundation**
**Seoul 151-050 (KR)**

(72) Inventors:
• **SEO, Jeong-Il**
**Daejon 305-728 (KR)**
• **BEACK, Seung-Kwon**
**Seoul 137-062 (KR)**
• **JANG, In-Seon**
**Daejon 305-804 (KR)**
• **KANG, Kyeong-Ok**
**Daejon 305-727 (KR)**
• **HONG, Jin-Woo**
**Daejon 305-755 (KR)**
• **CHOI, In-Yong**
**Seoul 151-818 (KR)**
• **CHON, Sang-Bae**
**Seoul 151-051 (KR)**
• **SUNG, Koeng-Mo**
**Seoul 151-080 (KR)**

(74) Representative: **Betten & Resch**
**Patentanwälte**
**Theatinerstrasse 8**
**80333 München (DE)**

(56) References cited:
**WO-A1-99/50824**

• **KARJALAINEN M.: 'A binaural auditory model for sound quality measurements and spatial hearing studies' PROCEEDINGS OF ICASSP-96, IEEE vol. 2, May 1996, pages 958 - 988, XP008129096**
• **TORRES-GUIJARRO S. ET AL.: 'Coding Strategies and quality measure for multichannel audio' AES 116TH CONVENTION May 2004, XP008129097**

## Description

## TECHNICAL FIELD

The present invention relates to an apparatus and method for estimating the auditory quality in a multi-channel audio codec; and, more particularly, to an apparatus and method for estimating the audio quality of a multi-channel audio codec by measuring a degree of degradation in the perceived audio quality of an audio signal which is encoded and decoded by the multi-channel audio codec with respect to an original signal before the compression.

## BACKGROUND ART

A study on a method for evaluating the audio quality of a monaural or a stereo channel audio signal codec has been made for a long period of time up to now. There is a proposal recommended by ITU Radiocommunication Sector (ITU-R)(see ITU-R Recommendation BS. 1387-1, "Method for objective measurements of perceived audio quality", International Telecommunication Union, Geneva, Switzerland, 1998).

The proposal, however, has a limitation that it cannot be used in an intermediate/low performance audio codec and a multi-channel audio codec.

On the other hand, for a multi-channel audio codec that is the object of evaluation, its development discussion is actively underway in the MPEG standard group (ISO/IEC/JTC1/SC29/WG11). There are the publications developed by various institutions. The audio quality evaluation of these codecs has been made by the listening subjective evaluation method based on the MUSHRA technique (ITU-R Recommendation BS. 1534-1, "Method for the subjective Assessment of Intermediate Sound Quality (MUSHRA)", International Telecommunication Union, Geneva, Switzerland, 2001). There are the publications on the listening evaluation results of diverse codecs employing the above method (see ISO/IEC JTC1/SC29/WGII(MPEG), N7138, "Report on MPEG Spatial Audio Coding RMO Listening Tests", and ISO/IEC JTC1/SC29/WG11(MPEG), N7139, "Spatial Audio Coding RMO Listening Test Data").

In evaluating the audio quality of the multi-channel audio codec, however, such a method is very subjective, wherein a listener directly listens to an audio signal, evaluates its audio quality, and conducts a statistical process thereon. Therefore, there is an urgent need for a method for performing an audio quality evaluation through a consistent audio quality measurement or predicting the result of the audio quality evaluation, without doing the listening evaluation and statistical process by the listener for the audio quality evaluation of the multi-channel audio codec.

In order to assess the objective quality of multichannel audio signals, a solution has been proposed in the prior art document TORRES-GUIJARRO S. ET AL.: "Coding Strategies and quality measure for multichannel audio" AES 116TH CONVENTION, May 2004 (2004-05), and consists in synthesizing binaural signals from multichannel audio signals, and further process the binaural signals in accordance with recommendation ITU-R BS.1387-1.

## DISCLOSURE

## TECHNICAL PROBLEM

An embodiment of the present invention is directed to providing an apparatus and method for evaluating the auditory quality in a multi-channel audio codec by means of the objective and consistent measurement of the audio signals, multi-channel in order to predict the subjective evaluation result produced by listeners in a multi-channel audio reproduction environment.

The other objects and advantages of the present invention can be understood by the following description, and become apparent with reference to the embodiments of the present invention. Also, it is obvious to those skilled in the art of the present invention that the objects and advantages of the present invention can be realized by the means as claimed and combinations thereof.

## TECHNICAL SOLUTION

In accordance with an aspect of the present invention, there are provided apparatuses for evaluating the audio quality of a multi-channel audio codec according to claims 1 and 2.

In accordance with another aspect of the present invention, there are provided methods for evaluating the audio quality of a multi-channel audio codec according to claims 8 and 10.

## ADVANTAGEOUS EFFECTS

As described above and will be given below, the present invention evaluates the audio quality of a multi-channel audio codec through the objective and consistent measurement of the audio quality, without performing the listening tests and statistical analysis. Accordingly, the present invention has an advantage in that a developer or user can simply evaluate the auditory quality of the multi-channel audio codec which is developed by the developer or used by the user, without a burden on time or economy.

In addition, the present invention has another advantage that the objective quality evaluation results of the multi-channel audio codec can be used as the to verify the subjective evaluation results from the listening tests.

## BRIEF DESCRIPTION OF THE DRAWINGS

Fig. 1 is a diagram illustrating a structure of a multi-channel audio reproduction system recommended by ITU-R, to which the present invention is applied.

Fig. 2 is a diagram illustrating a structure of an apparatus for evaluating the audio quality of a multi-channel audio codec in accordance with a preferred embodiment of the present invention.

Fig.3 is a diagram describing an embodiment of a total sound transfer path in accordance with the present invention.

Fig. 4 is a diagram describing the operation of one example of the preprocessing unit of the binaural signal synthesis in accordance with the present invention.

Fig. 5 is a flowchart illustrating a method for evaluating the audio quality of the multi-channel audio codec in accordance with another preferred embodiment of the present invention.

## BEST MODE FOR THE INVENTION

The advantages, features and aspects of the invention will become apparent from the following description of the embodiments with reference to the accompanying drawings, which is set forth hereinafter, so that a person skilled in the art will easily carry out the invention. Further, in the following description, well-known arts will not be described in detail if it seems that they could obscure the invention in unnecessary detail. Hereinafter, preferred embodiments of the present invention will be described in detail with reference to the accompanying drawings.

In general, a multi-channel audio has 6 channels (or 5.1 channel) such as front speakers (LF (left front) and RF (right front)), a center speaker (C), an intermediate and low sound channel (LFE: low frequency effect), and rear speakers ((LS (left surround) and RS (right surround)). Among these, since the LFE is not actually used in many cases, only the 5 channel channels of the front speakers (LF and RF), the center speaker (C), and the rear speakers (LS and RS) are used.

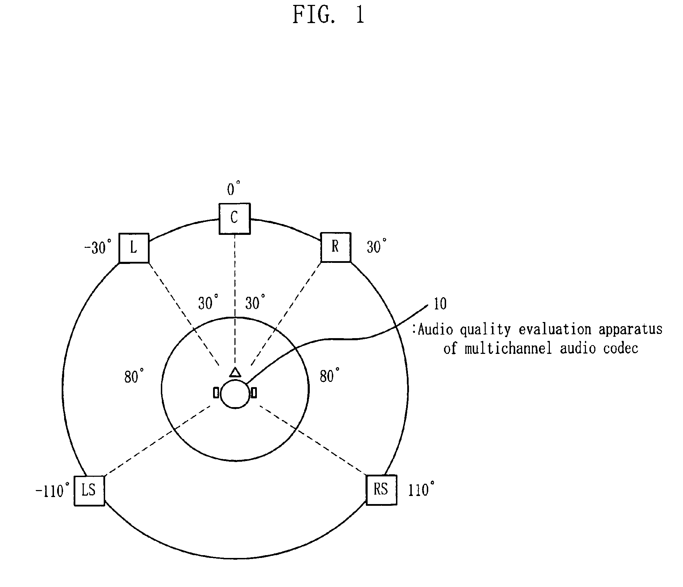

Fig. 1 is a diagram illustrating a structure of a multi-channel audio reproduction system recommended by ITU-R, to which the present invention is applied.

As shown in Fig. 1, in the multi-channel audio reproduction system recommended by the ITU-R, the 5 channel speakers are arranged on the line of one circle centering around a listener 10, wherein the front left and the right speakers L and R and the listener 10 forms a regular triangle. The distance between the center speaker C in the front and the listener 10 is equal to that between the front left and the right speakers L and R. And, the rear left and the right speakers LS and RS are placed on the concentric circle of 100 to 120 degrees with respect to the front which is 0 degree.

The reason that the reproduction system should conform to the standard arrangement recommended by the ITU-R is that the intended audio quality (the best audio quality) can be obtained by doing so because most of sources were edited/recorded based on the arrangement standard.

The present invention substitutes the listener 10 of the multi-channel audio reproduction system recommended by the ITU-R by an audio quality evaluation apparatus of the multi-channel audio codec which evaluates the audio quality by measuring impulse responses of multi-channel audio signals from the 5 channel speakers L, R, C, LS and RS by using an binaural microphone that simulates the body (the head and upper half).

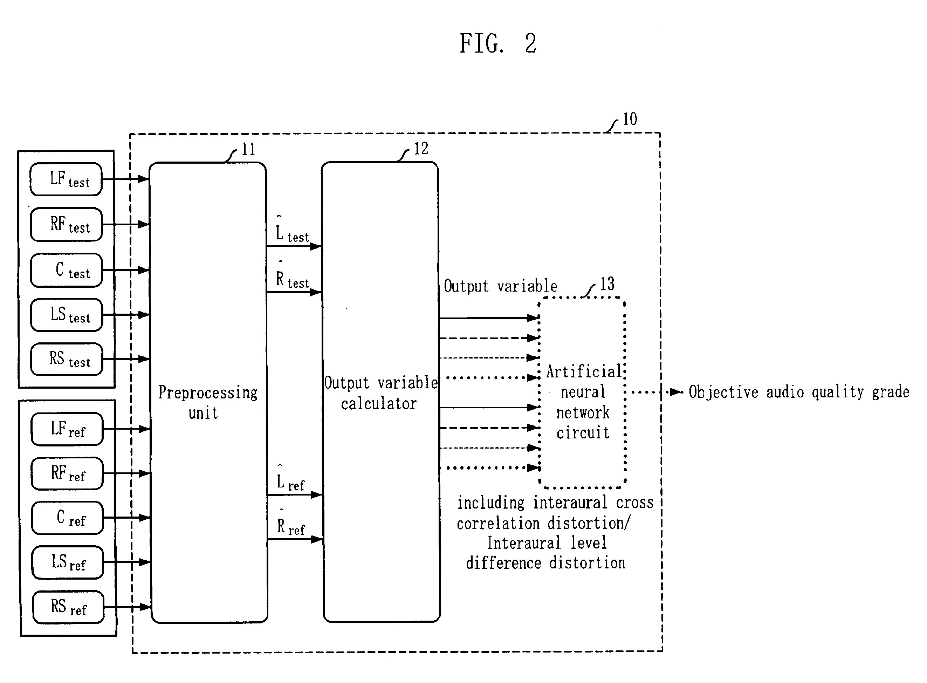

Fig. 2 is a diagram illustrating a structure of an apparatus for evaluating the audio quality of a multi-channel audio codec in accordance with a preferred embodiment of the invention.

As shown in Fig. 2, the audio quality evaluation apparatus 10 of the multi-channel audio codec includes a preprocessing unit 11 for synthesizing binaural signals $\hat{L}_{ref}$, $\hat{R}_{ref}$, $\hat{L}_{test}$, and $\hat{R}_{test}$ based on multi-channel audio signals transmitted through the channels L, R, C, LS and RS of a standard multi-channel audio reproduction system recommended by the ITU-R, an output variable calculator 12 for calculating an interaural cross-correlation coefficient distortion (IACCDist), an interaural level difference distortion (ILDDist) and, and other conventional output variables, and an artificial neural network circuit 13 for outputting a grade of the audio quality on the basis of the interaural cross-correlation coefficient distortion (IACCDist), the interaural level difference distortion (ILDDist) and the other output variables provided from the output variable calculator 12.

Here, the interaural cross-correlation coefficient (IACC) represents the maximum value of the normalized cross correlation function between the left ear input and the right ear input, and the interaural level difference ILD denotes the ratio of intensity of signals between the left ear input and the right ear input.

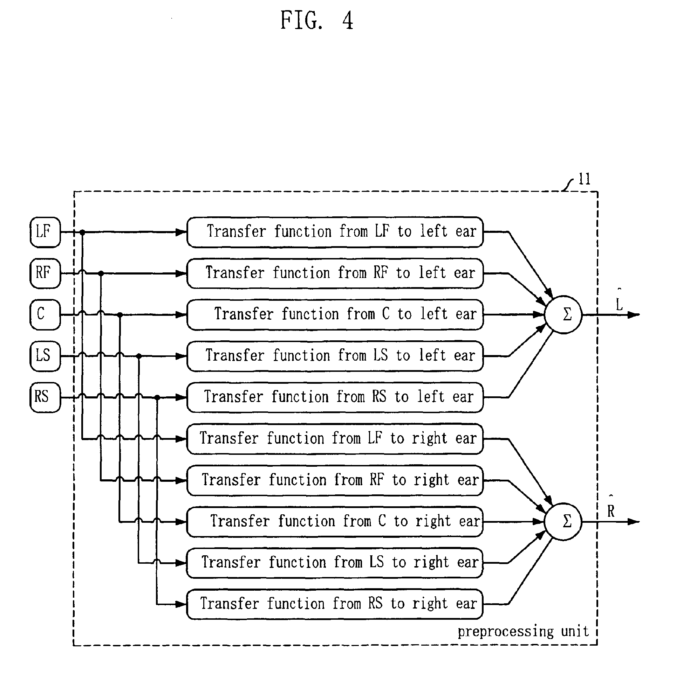

The following is a brief explanation on the operation of each of the components of the audio quality evaluation apparatus of the multi-channel audio codec according to the invention. Five channel signals of sound sources which are encoded and decoded by the multi-channel audio codec to be evaluated are indicated by $LF_{test}$, $RF_{test}$, $C_{test}$, $LS_{test}$ and $RS_{test}$, and Five channel signals of their original sound sources are denoted by $LF_{ref}$, $RF_{ref}$, $C_{ref}$, $LS_{ref}$ and $RS_{ref}$. First, the total ten signals of $LF_{test}$, $RF_{test}$, $C_{test}$, $LS_{test}$, $RS_{test}$, $LF_{ref}$, $RF_{ref}$, $C_{ref}$, $LS_{ref}$ and $RS_{ref}$ are inputted to the preprocessing unit 10. The preprocessing unit 10 convolves head related impulse responses of corresponding azimuth angles - that simulate the transfer function of the sound propagation path including the body (head and torso) of a listener - to the 5 channel test signals and 5 channel reference signals., and sums up the convolutions, to thereby calculate the binaural signals $\hat{L}_{ref}$, $\hat{R}_{ref}$, $\hat{L}_{test}$, and $\hat{R}_{test}$. The purpose of this process is the simulation of the acoustical environment in the audio reproduction layouts, and the process is illustrated as a block diagram in Fig.4.

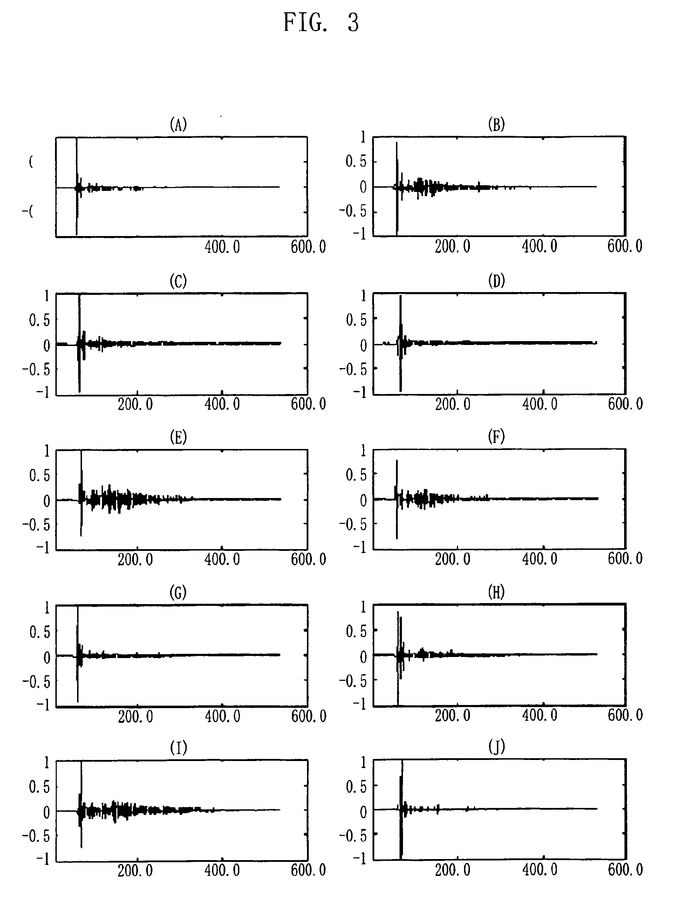

At this time, the total number of the sound transfer paths is ten, due to the five locations of loudspeakers and two ears of a listener, which may be represented by graphs as depicted in Fig. 3.

The output variable calculator 12 calculates the interaural cross-correlation coefficient distortion (IACCDist) and the interaural level difference distortion (ILDDist). Those two novel variables, IACCDist and ILDDist, mirror degradations in the attributes of spatial quality. The calculated interaural cross-correlation coefficient distortion (IACCDist), the interaural level difference distortion (ILDDist), and the other possible variables are then provided to the artificial neural network circuit 13. The artificial neural network circuit 13 outputs a grade of the audio quality based on the interaural cross-correlation coefficient distortion (IACCDist), the interaural level difference distortion (ILDDist), and the other possible variables provided from the output variable calculator 12.

Here, the output variable calculator 12 calculates the interaural cross-correlation coefficient distortion (IACCDist) and the interaural level difference distortion (ILDDist) by using the following equations (1) and (2). The interaural level difference (ILD) of an uncompressed original audio signal is named $ILD_{ref}$ and the interaural level difference (ILD) of the audio signal which is encoded and decoded bv the multi-channel audio codec under test is named $ILD_{test}$. Also, the interaural cross-correlation coefficients (IACC) may be named in the similar way. For the calculation of interaural cross-correlation coefficient (IACC) and the interaural level difference (ILD), the binaural signals are converted to time-frequency segment signals with the 75% overlapped time frames (of the length that equivalent to 50ms for IACC, and of the length that equivalent to 10ms for ILD) and 24 auditory critical bands filter-banks. Among these, the interaural level difference distortion ILDDist for a k'th frequency band of an n'th time frame is represented as $ILDDist[k,n]$.

$$ILDDist[k,n] = w[k,n]\,|\,ILD_{test}[k,n] - ILD_{ref}[k,n]\,| \qquad \text{Eq. (1)}$$

wherein *ILDDist* denotes the interaural level difference distortion, and w[k,n] is a weighted function that is decided depending on the range of the critical band, which reflects the intensity level of a time-frequency segment and auditory sensitivity to the interaural level difference ILD.

Meanwhile, to acquire the interaural level difference distortion $^{ILDDist}$ of the entire auditory band in the n'th time frame, an average is taken for the entire frequency bands as following:

$$ILDDist[n] = \frac{1}{Z} \sum_{k=0}^{Z-1} ILDDist[k,n] \qquad \text{Eq. (2)}$$

By averaging again the ILDDist[n] for the entire time frames, the interaural level difference distortion $^{ILDDist}$ of the multi-channel audio codec can be calculated, and the interaural cross-correlation coefficient (IACC) can also be calculated in the same way. At this time, the interaural cross-correlation coefficient distortion IACCDist is named $^{ICCDist}$; and since the interaural level difference distortion $^{ILDDist}$ and the interaural cross correlation distortion $^{ICCDist}$ have the high cross correlation with the audio quality evaluation (subjective evaluation) result of the multi-channel audio codec by the listener, the output variable calculator 12 can regard these as the output variables. These values and the other possible output variables are inputted to the artificial neural network circuit 13, to thereby output the one-dimensional grade of the audio quality with the objectivity and consistency.

Fig. 4 is a diagram describing the operation of one example of the preprocessing unit of the audio quality evaluation apparatus in accordance with the invention.

As shown in Fig. 4, the preprocessing unit 11 of the audio quality evaluation apparatus 10 converts an impulse response of each sound transfer path which is measured by using an interaural microphone that simulates the body (the head and upper half) of the standard multichannel audio reproduction system recommended by the ITU-R into a transfer function, and sums up the transfer functions, to thereby calculate the interaural input signals $\hat{L}_{ref}$, $\hat{R}_{ref}$, $\hat{L}_{test}$ and $\hat{R}_{test}$.

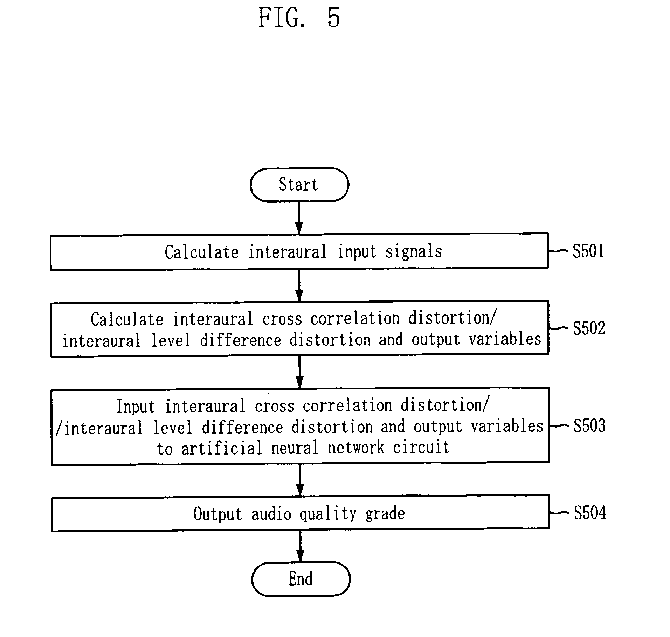

Fig. 5 illustrates a flowchart of a method of evaluating the audio quality of the multi-channel audio codec in accordance with another preferred embodiment of the present invention.

First of all, the preprocessing unit 11 of the audio quality evaluation apparatus 10 of the multi-channel audio codec converts an impulse response of each of a sound source which is encoded and decoded by the multi-channel audio codec and an original sound source into a transfer function, and sums up the transfer functions, to thereby calculate the interaural input signals $\hat{L}_{ref}$, $\hat{R}_{ref}$, $\hat{L}_{test}$ and $\hat{R}_{test}$ (501).

Thereafter, the output variable calculator 12 calculates the interaural cross-correlation coefficient distortion (IACCDist) and the interaural level difference distortion (ILDDist) from the time-frequency segments of the binaural signals $\hat{L}_{ref}$, $\hat{R}_{ref}$, $\hat{L}_{test}$ and $\hat{R}_{test}$ provided by the preprocessing unit 11, and calculates other possible output variables (502) also from the binaural signals. The calculated interaural cross-correlation coefficient distortion (IACCDist), the interaural level difference distortion (ILDDist), and the other possible output variables are then applied to the artificial neural network circuit 13 (503).

The artificial neural network circuit 13 outputs a grade of the audio quality based on the inputted output variables including interaural cross-correlation coefficient distortion (IACCDist), the interaural level difference distortion (ILDDist), and the other possible output variables (504).

The method of the present invention as mentioned above may be implemented by a software program that is stored in a computer-readable storage medium such as CD-ROM, RAM, ROM, floppy disk, hard disk, optical magnetic disk, or the like. This process may be readily carried out by those skilled in the art; and therefore, details of thereof are omitted here.

While the present invention has been described with respect to the particular embodiments, it will be apparent to those skilled in the art that various changes and modifications may be made without departing from the scope of the invention as defined in the following claims.

**Claims**

1. An apparatus for evaluating the audio quality of a multi-channel audio codec, comprising:

   a preprocessing unit for synthesizing binaural signals based on multi-channel audio signals transmitted through channels L, R, C, LS and RS of a multi-channel audio reproduction system, wherein the multi-channel audio signals include a sound source which is encoded and decoded by a multi-channel audio codec as multi-channel test signal, and an original sound source as multi-channel reference signal, and the binaural signals include a binaural reference signal corresponding to the multi-channel reference signal and a binaural test signal corresponding to the multi-channel test signal; and **characterized by** further comprising:
   an output variable calculator for calculating an interaural cross-correlation coefficient distortion IACCDist and other output variables of the binaural signals; and
   an artificial neural network circuit for outputting a grade of the audio quality based on the interaural cross-correlation coefficient distortion IACCDist and the other output variables calculated in the output variable calculator.

2. An apparatus for evaluating the audio quality of a multi-channel audio codec, comprising:

   a preprocessing unit for synthesizing binaural signals based on multi-channel audio signals transmitted through channels L, R, C, LS and RS of a multi-channel audio reproduction system, wherein the multi-channel audio signals include a sound source which is encoded and decoded by a multi-channel audio codec as multi-channel test signal, and an original sound source as multi-channel reference signal, and the binaural signals include a binaural reference signal corresponding to the multi-channel reference signal and a binaural test signal corresponding to the multi-channel test signal; and **characterized by** further comprising:

   an output variable calculator for calculating an interaural level difference distortion ILDDist and other output variables of the binaural signals; and
   an artificial neural network circuit for outputting a grade of the audio quality based on the interaural level difference distortion ILDDist and the other output variables calculated in the output variable calculator.

3. The apparatus of claim 1 or 2, wherein the preprocessing unit converts multi-channel audio signals into the binaural signals by the means of convolving head and torso related impulse responses of each sound transfer path corresponding multi-channel signals, and summing up the transferred signals.

4. The apparatus of claim 1, wherein the output variable calculator calculates the interaural cross-correlation coefficient distortion IACCDist of the binaural signals by using difference between interaural cross-correlation coefficient IACC of the original sound source and interaural cross-correlation coefficient IACC of the audio signal which is encoded and decoded by the

5. The apparatus of claim 4, wherein the interaural cross-correlation coefficient IACC represents cross correlation of signals being inputted to both ears, interaural.

6. The apparatus of claim 2, wherein the output variable calculator calculates the interaural level difference distortion ILDDist of the binaural signals by using difference between interaural level difference ILD of the original sound source and interaural level difference ILD of the audio signal which is encoded and decoded by the multi-channel audio codec.

7. The apparatus of claim 6, wherein the interaural level difference ILD represents ratio of energies of signals being inputted to both ears interaural.

8. A method for evaluating the audio quality of a multi-channel audio codec, comprising the steps of:

synthesizing binaural signals based on multi-channel audio signals transmitted through channels L, R, C, LS and RS of a multi-channel audio reproduction system, wherein the multi-channel audio signals include a sound source which is encoded and decoded by a multi-channel audio codec as multi-channel test signal, and an original sound source as multi-channel reference signal, and the binaural signals include a binaural reference signal corresponding to the multi-channel reference signal and a binaural test signal corresponding to the multi-channel test signal; and **characterized by** further comprising the steps of:

calculating an interaural cross-correlation coefficient distortion IACCDist and other output variables of the binaural signals; and
outputting a grade of the audio quality based on the calculated interaural cross-correlation coefficient distortion IACCDist and the output variables using an artificial neural network.

9. The method of claim 8, further comprising the features as defined in one of claim 4 or 5.

10. A method for evaluating the audio quality of a multi-channel audio codec, comprising the steps of:

synthesizing binaural signals based on multi-channel audio signals transmitted through channels L, R, C, LS and RS of a multi-channel audio reproduction system, wherein the multi-channel audio signals include a sound source which is encoded and decoded by a multi-channel audio codec as multi-channel test signal, and an original sound source as multi-channel reference signal, and the binaural signals include a binaural reference signal corresponding to the multi-channel reference signal and a binaural test signal corresponding to the multi-channel test signal; and **characterized by** further comprising the steps of:

calculating an interaural level difference distortion ILDDist and other output variables of the binaural signals; and
outputting a grade of the audio quality based on the calculated interaural level difference distortion ILDDist and the output variables.

11. The method of claim 10, wherein the output variable calculating step calculates the interaural level difference distortion ILDDist by using difference between interaural level difference ILD of the original sound source and interaural level difference ILD of the audio signal which is encoded and decoded by the multi-channel audio codec using an artificial neural network.

12. The method of claim 11, wherein the interaural level difference ILD represents ratio of energies of signals being inputted to both ears, interaural.

**Patentansprüche**

1. Eine Vorrichtung zum Evaluieren der Audioqualität eines Multikanal-Audiocodec, aufweisend:

   eine Vorverarbeitungseinheit zum Synthetisieren binauraler Signale basierend auf Multikanal-Audiosignalen, die durch Kanäle L, R, C, LS und RS eines Multikanal-Audioreproduktionssystems übertragen werden, wobei die Multikanal-Audiosignale eine Tonquelle als Multikanal-Testsignal einschießen, die durch einen Multikanal-Audiocodec codiert und decodiert wird, und eine Original-Tonquelle als Multikanal-Referenzsignal, und wobei die binauralen Signale ein binaurales Referenzsignal einschießen, das dem Multikanal-Referenzsignal entspricht und ein binaurales Testsignal, das dem Multikanal-Testsignal entspricht, und **dadurch gekennzeichnet, dass** sie ferner aufweist:

   einen Ausgangsvariablen-Kalkulator zum Berechnen einer Störung eines interauralen Kreuzkorrelationskoeffizienten IACCDist und anderer Ausgangsvariablen der binauralen Signale; und
   einen künstlichen Neuronales-Netzwerk-Schaltkreis zum Ausgeben eines Grades der Audioqualität basierend auf der Störung des interauralen Kreuzkorrelations-koeffizienten IACCDist und der anderen Ausgangsvariablen, die in dem Ausgangsvariablen-Kalkulator berechnet wurden.

2. Eine Vorrichtung zum Evaluieren der Audioqualität eines Multikanal-Audiocodec, aufweisend:

   eine Vorverarbeitungseinheit zum Synthetisieren binauraler Signale basierend auf Multikanal-Audiosignalen, die durch Kanäle L, R, C, LS und RS eines Multikanal-Audioreproduktionssystems übertragen werden, wobei die Multikanal-Audiosignale eine Tonquelle als Multikanal-Testsignal einschließen, die durch einen Multikanal-Audiocodec codiert und decodiert wird, und eine Original-Tonquelle als Multikanal-Referenzsignal, und wobei binauralen Signale ein binaurales Referenzsignal einschließen, das dem Multikanal-Referenzsignal entspricht und ein binaurales Testsignal, das dem Multikanal-Testsignal entspricht; und **gekennzeichnet dadurch, dass** er ferner aufweist:

   einen Ausgangsvariablen-Kalkulator zum Berechnen einer Störung des interauralen Pegelunterschieds ILDDist und anderer Ausgangsvariablen der binauralen Signale; und
   einen künstlichen Neuronales-Netzwerk-Schaltkreis zum Ausgeben eines Grades der Audioqualität basierend auf der Störung des interauralen Pegelunterschieds ILDDist und der anderen Ausgangsvariablen, die in dem Ausgangsvariablen-Kalkulator berechnet wurde.

3. Vorrichtung nach Anspruch 1 oder 2, wobei die Vorverarbeitungseinheit Multikanal-Audiosignale in die binauralen Signale konvertiert durch Falten von kopf- und torsobezogenen Impulsantworten von jedem Ton-übertragungspfad, der Multikanalsignalen entspricht, und durch Aufsummieren der übertragenen Signale.

4. Die Vorrichtung nach Anspruch 1, wobei der Ausgangsvariablen-Kalkulator die Störung des interauralen Kreuzkorrelationskoeffizienten IACCDist der binauralen Signale berechnet durch Verwendung des Unterschieds zwischen dem interauralen Kreuzkorrelationskoeffizienten IACC der originalen Tonquelle und des interauralen Kreuzkorrelations-koeffizienten IACC des Audiosignals, das durch den Multikanal-Audiocodec codiert und decodiert wird.

5. Vorrichtung nach Anspruch 4, wobei der interaurale Kreuzkorrelations-koeffizienten IACC die Kreuzkorrelation von Signalen repräsentiert, die in beide Ohren interaural eingeben werden.

6. Die Vorrichtung nach Anspruch 2, wobei der Ausgangsvariablen-Kalkulator die Störung des interauralen Pegelunterschieds ILDDist des binauralen Signals berechnet durch Berechnung der Differenz zwischen dem interauralen Pegelunterschied ILD der originalen Tonquelle und dem interauralen Pegelunterschied ILD des Audiosignals, das durch den Multikanal-Audiocodec codiert und decodiert wird.

7. Die Vorrichtung nach Anspruch 6, wobei der interaurale Pegelunterschied ILD das Verhältnis der Energien von Signalen repräsentiert, die in beide Ohren interaural eingegeben werden.

8. Ein Verfahren zum Evaluieren der Audioqualität eines Multikanal-Audiocodec, aufweisend die Schritte:

   Synthetisieren binauraler Signale basierend auf Multikanal-Audiosignalen, die über Kanäle L, R, C, LS und RS eines Multikanal-Audioproduktionssystems übertragen werden, wobei die Multikanal-Audiosignale eine Tonquelle als Multikanal-Testsignal einschließen, die durch einen Multikanal-Audiocodec codiert und decodiert wird, und eine Origianl-Tonquelle als Multikanal-Referenzsignal, und wobei die binauralen Signale ein binaurales Referenzsignal einschließen, das dem Multikanal-Referenzsignal entspricht und ein binaurales Testsignal, das dem Multikanal-Testsignal entspricht; **gekennzeichnet dadurch, dass** es ferner folgende Schritte aufweist:

Berechnen einer Störung eines interauralen Kreuzkorrelations-koeffizienten IACCDist und anderer Ausgangsvariablen der binauralen Signale; und

Ausgeben eines Grades der Audioqualität basierend auf der berechneten Störung des interauralen Kreuzkorrelationskoeffizienten IACCDist und der Ausgangsvariablen unter Verwendung eines artifiziellen neuronalen Netzes.

9.  Das Verfahren nach Anspruch 8, ferner aufweisend die Merkmale wie definiert in einem der Ansprüche 4 oder 5.

10.  Ein Verfahren zum Evaluieren der Audioqualität eines Multikanal-Audiocodec aufweisend die Schritte:

Synthetisieren von binauralen Signalen basierend auf Multikanal-Audiosignalen, die über Kanäle L, R, C, LS und RS als Multikanal-Audioreproduktionssystems übertragen werden, wobei die Multikanal-Audiosignale eine Tonquelle als Testsignal einschießen, die durch einen Multikanal-Audiocodec codiert und decodiert wird, und eine Original-tonquelle als Multikanal-Referenzsignal, und wobei die binauralen Signale ein binaurales Referenzsignal einschließen, das dem Multikanal-Referenzsignal entspricht, und ein binaurales Testsignal, das dem Multikanal-Testsignal entspricht; und ferner **gekennzeichnet durch** folgende Schritte:

Berechnen einer Störung eines interauralen Pegelunterschieds ILDDist und anderer Ausgangsvariablen der binauralen Signale; und

Ausgeben eines Grades der Audioqualität basierend auf der berechneten Störung des interauralen Pegelunterschieds und der Ausgangsvariablen.

11.  Verfahren nach Anspruch 10, wobei der Schritt der Berechnung der Ausgangsvariablen die Störung des interauralen Pegelunterschieds ILDDist berechnet wird unter Verwendung des Unterschieds zwischen dem interauralen Pegelunterschied ILD der Original-Tonquelle und dem interauralen Pegelunterschied ILD des Audiosignals, das durch den Multikanal-Audiocodec unter Verwendung eines artifiziellen neuronalen Netzes codiert und decodiert wird.

12.  Verfahren nach Anspruch 11, wobei der interaurale Pegelunterschied ILD das Verhältnis von Energien von Signalen repräsentiert, die in beide Ohren interaural eingegeben werden.

## Revendications

1.  Appareil pour évaluer la qualité audio d'un codeur-décodeur audio multicanal, comprenant :

une unité de prétraitement pour synthétiser les signaux binauraux sur la base de signaux audio multicanaux transmis par le biais des canaux L, R, C, LS et RS d'un système de reproduction audio multicanal, les signaux audio multicanaux comprenant une source sonore qui est codée et décodée par un codeur-décodeur audio multicanal en tant que signal de test multicanal, et une source sonore originale en tant que signal de référence multicanal, et les signaux binauraux comprenant un signal de référence binaural correspondant au signal de référence multicanal et un signal de test binaural correspondant au signal de test multicanal ; et **caractérisé en ce qu'**il comprend en outre :

un calculateur de variables de sortie pour calculer une distorsion de coefficient de corrélation croisée interaurale IACCDist et d'autres variables de sortie des signaux binauraux ; et
un circuit de réseau neuronal artificiel pour produire un degré de la qualité audio sur la base de la distorsion de coefficient de corrélation croisée interaurale IACCDist et des autres variables de sortie calculées dans le calculateur de variables de sortie.

2.  Appareil pour évaluer la qualité audio d'un codeur-décodeur audio multicanal, comprenant :

une unité de prétraitement pour synthétiser les signaux binauraux sur la base de signaux audio multicanaux transmis par le biais des canaux L, R, C, LS et RS d'un système de reproduction audio multicanal, les signaux audio multicanaux comprenant une source sonore qui est codée et décodée par un codeur-décodeur audio multicanal en tant que signal de test multicanal, et une source sonore originale en tant que signal de référence multicanal, et les signaux binauraux comprenant un signal de référence binaural correspondant au signal de référence multicanal et un signal de test binaural correspondant au signal de test multicanal ; et **caractérisé en ce qu'**il comprend en outre :

un calculateur de variables de sortie pour calculer une distorsion de différence de niveau interaurale ILDDist et d'autres variables de sortie des signaux binauraux ; et
un circuit de réseau neuronal artificiel pour produire un degré de la qualité audio sur la base de la distorsion de différence de niveau interaurale ILDDist et des autres variables de sortie calculées dans le calculateur de variables de sortie.

3. Appareil selon la revendication 1 ou 2, dans lequel l'unité de prétraitement convertit les signaux audio multicanaux en les signaux binauraux au moyen d'une convolution des réponses impulsionnelles relatives à la tête et au torse de chaque trajet de transfert sonore correspondant aux signaux multicanaux, et en ajoutant les signaux transférés.

4. Appareil selon la revendication 1, dans lequel le calculateur de variables de sortie calcule la distorsion de coefficient de corrélation croisée interaurale IACCDist des signaux binauraux en utilisant la différence entre le coefficient de corrélation croisée interaurale IACC de la source sonore originale et le coefficient de corrélation croisée interaurale IACC du signal audio qui est codé et décodé par le codeur-décodeur audio multicanal.

5. Appareil selon la revendication 4, dans lequel le coefficient de corrélation croisée interaurale IACC représente la corrélation croisée de signaux interauraux, entrés dans les deux oreilles.

6. Appareil selon la revendication 2, dans lequel le calculateur de variables de sortie calcule la distorsion de différence de niveau interaurale ILDDist des signaux binauraux en utilisant la différence entre la différence de niveau interaurale ILD de la source sonore originale et la différence de niveau interaurale ILD du signal audio qui est codé et décodé par le codeur-décodeur audio multicanal.

7. Appareil selon la revendication 6, dans lequel la différence de niveau interaurale ILD représente le rapport des énergies des signaux interauraux, entrés dans les deux oreilles.

8. Procédé pour évaluer la qualité audio d'un codeur-décodeur audio multicanal, comprenant les étapes consistant à :

synthétiser les signaux binauraux sur la base de signaux audio multicanaux transmis par le biais des canaux L, R, C, LS et RS d'un système de reproduction multicanal, les signaux audio multicanaux comprenant une source sonore qui est codée et décodée par un codeur-décodeur audio multicanal en tant que signal de test multicanal, et une source sonore originale en tant que signal de référence multicanal, et les signaux binauraux comprenant un signal de référence binaural correspondant au signal de référence multicanal et un signal de test binaural correspondant au signal de test multicanal ; et **caractérisé en ce qu'**il comprend en outre les étapes consistant à :

calculer une distorsion de coefficient de corrélation croisée interaurale IACCDist et d'autres variables de sortie des signaux binauraux ; et
produire un degré de la qualité audio sur la base de la distorsion de coefficient de corrélation croisée interaurale IACCDist calculée et des variables de sortie en utilisant un réseau neuronal artificiel.

9. Procédé selon la revendication 8, comprenant en outre les caractéristiques telles que définies dans une des revendications 4 ou 5.

10. Procédé pour évaluer la qualité audio d'un codeur-décodeur audio multicanal, comprenant les étapes consistant à :

synthétiser les signaux binauraux sur la base de signaux audio multicanaux transmis par le biais des canaux L, R, C, LS et RS d'un système de reproduction audio multicanal, les signaux audio multicanaux comprenant une source sonore qui est codée et décodée par un codeur-décodeur audio multicanal en tant que signal de test multicanal, et une source sonore originale en tant que signal de référence multicanal, et les signaux binauraux comprenant un signal de référence binaural correspondant au signal de référence multicanal et un signal de test binaural correspondant au signal de test multicanal ; et **caractérisé en ce qu'**il comprend en outre les étapes consistant à :

calculer une distorsion de différence de niveau interaural ILDDist et d'autres variables de sortie des signaux binauraux ; et
produire un degré de la qualité audio sur la base de la distorsion de différence de niveau interaurale ILDDist calculée et des variables de sortie.

**11.** Procédé selon la revendication 10, dans lequel l'étape de calcul de variables de sortie calcule la distorsion de différence de niveau interaurale ILDDist en utilisant la différence de niveau interaurale ILD de la source sonore originale et la différence de niveau interaurale ILD du signal audio qui est codé et décodé par le codeur-décodeur audio multicanal en utilisant un réseau neuronal artificiel.

**12.** Procédé selon la revendication 11, dans lequel la différence de niveau interaurale ILD représente le rapport des énergies de signaux interauraux, entrés dans les deux oreilles.

FIG. 1

FIG. 2

EP 1 979 900 B1

# FIG. 3

# FIG. 4

| | |
|---|---|
| LF | Transfer function from LF to left ear |
| RF | Transfer function from RF to left ear |
| C | Transfer function from C to left ear |
| LS | Transfer function from LS to left ear |
| RS | Transfer function from RS to left ear |
| | Transfer function from LF to right ear |
| | Transfer function from RF to right ear |
| | Transfer function from C to right ear |
| | Transfer function from LS to right ear |
| | Transfer function from RS to right ear |

11

$\hat{L}$

$\hat{R}$

preprocessing unit

# FIG. 5

```
        ┌─────────────┐
        │    Start    │
        └──────┬──────┘
               │
               ▼
┌──────────────────────────────────────────┐
│   Calculate interaural input signals      │──── S501
└──────────────────┬───────────────────────┘
                   │
                   ▼
┌──────────────────────────────────────────┐
│ Calculate interaural cross correlation    │
│ distortion/ interaural level difference   │──── S502
│ distortion and output variables           │
└──────────────────┬───────────────────────┘
                   │
                   ▼
┌──────────────────────────────────────────┐
│ Input interaural cross correlation        │
│ distortion/ /interaural level difference  │──── S503
│ distortion and output variables to        │
│ artificial neural network circuit         │
└──────────────────┬───────────────────────┘
                   │
                   ▼
┌──────────────────────────────────────────┐
│        Output audio quality grade         │──── S504
└──────────────────┬───────────────────────┘
                   │
                   ▼
        ┌─────────────┐
        │     End     │
        └─────────────┘
```

**EP 1 979 900 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Method for objective measurements of perceived audio quality. *International Telecommunication Union,* 1998
- Method for the subjective Assessment of Intermediate Sound Quality (MUSHRA). *International Telecommunication Union,* 2001

- **TORRES-GUIJARRO S. et al.** Coding Strategies and quality measure for multichannel audio. *AES 116TH CONVENTION,* May 2004